# FASCICULE DE BREVET EUROPEEN

(11) **EP 3 155 937 B1**
(45) Date de publication et mention de la délivrance du brevet: **15.08.2018**
(21) Numéro de dépôt: 16193167.0
(22) Date de dépôt: 10.10.2016
(51) Int. Cl.: A47J 31/44

(54) **DISPOSITIF DE DISTRIBUTION DE BOISSONS À DOUBLE SORTIE ET MACHINE À CAFÉ COMPORTANT UN TEL DISPOSITIF**
VORRICHTUNG ZUR GETRÄNKEAUSGABE MIT DOPPELTEM AUSLAUF, UND KAFFEEMASCHINE, DIE EINE SOLCHE VORRICHTUNG UMFASST
BEVERAGE DISPENSING DEVICE WITH DUAL OUTPUT AND COFFEE MACHINE COMPRISING SUCH A DEVICE

(30) Priorité: 15.10.2015 FR 1559821
(43) Date de publication de la demande: 19.04.2017
(73) Titulaire: SEB S.A., 69130 Ecully (FR)
(72) Inventeur: REVEILLERE, Fabrice, 53100 MAYENNE (FR); GEROULT, Marc, 72610 OISSEAU-LE-PETIT (FR); DUTOYA, Laurence, 53500 MONTENAY (FR)
(74) Mandataire: Bourrières, Patrice

(56) Documents cités:
- EP-A1- 0 820 715
- EP-A1- 2 606 782
- EP-A1- 2 820 983

## Description

La présente invention se rapporte au domaine technique général des appareils de production de boissons, en particulier des dispositifs de distribution d'une boisson à base de lait moussé à double sortie destinés à coopérer avec un système de moussage de lait d'une machine à café pour produire une boisson.

Il est connu des documents EP0820715 et EP2606782 un dispositif de distribution d'une boisson à base de lait moussé comportant une chambre munie
- d'un conduit d'entrée recevant un flux de lait moussé en provenance d'une buse de sortie de lait moussé d'un système de moussage de lait,
- et de deux conduits de distribution destinés à déverser la boisson issue de la buse de sortie de lait moussé dans deux récipients.

La chambre décrite dans EP2606782, comporte un conduit horizontal muni de deux extrémités auxquelles sont raccordés les conduits de distribution. Le conduit d'entrée du flux de lait moussé est raccordé verticalement au centre du conduit horizontal.

Ainsi, le flux de lait moussé va brutalement changer de direction et va se répartir sur les deux conduits de distributions de manière aléatoire, notamment à cause des bulles de lait plus ou moins grosses qui ralentissent le flux dans l'un ou l'autre des conduits de distribution. En conséquence, la répartition du lait moussé dans chaque récipient ne sera pas homogène.

De plus, si des résidus de lait se déposent et adhérent dans les différents conduits du dispositif de distribution, il est très difficile de les nettoyer.

Le but de la présente invention est de remédier aux inconvénients précités et de proposer un dispositif de distribution d'une boisson à base de lait moussé à double sortie destiné à coopérer avec un système de moussage de lait ainsi qu'une machine à café mettant en oeuvre ce dispositif qui permette de répartir le flux de lait moussé de manière homogène, en deux parts égales.

Un autre but de la présente invention est de proposer un dispositif de distribution d'une boisson à base de lait moussé à double sortie destiné à coopérer avec un système de moussage de lait ainsi qu'une machine à café mettant en oeuvre ce dispositif qui présente une mise en oeuvre simple et ergonomique, notamment pour le nettoyage.

Ces buts sont atteints avec un dispositif de distribution d'une boisson à base de lait moussé comportant une chambre munie d'un conduit d'entrée recevant un flux de lait moussé en provenance d'une buse de sortie de lait moussé d'un système de moussage de lait et de deux conduits de distribution destinés à déverser la boisson issue de la buse de sortie de lait moussé dans deux récipients, caractérisé en ce que la chambre comporte un couvercle amovible qui comprend une face inférieure orientée vers l'intérieur de la chambre et en ce que la face inférieure comporte au moins deux nervures de répartition du lait moussé qui s'étendent vers l'intérieur de la chambre et qui sont agencées dans le flux de lait moussé issu du conduit d'entrée et/ou deux protubérances en forme de pointe incurvée agencées au-dessus des deux conduits de distribution.

Les nervures permettent d'éviter à une partie du flux d'atteindre directement un des conduits de distribution. Ainsi, les nervures forment des chicanes qui permettent de briser le flux de lait moussé à la sortie du conduit d'entrée, puis de limiter les perturbations au fur et à mesure que le flux progresse dans les chicanes pour assurer une répartition homogène vers les deux conduits de distribution.

Les deux protubérances en forme de pointe incurvée agencées au-dessus des deux conduits de distribution permettent d'empêcher à de grosses bulles de stagner au-dessus de l'un ou l'autre des conduits de distribution. Ainsi, l'écoulement du lait moussé n'est pas perturbé par une bulle bloquée au-dessus d'un conduit de distribution et cet écoulement est bien réparti en deux parts égales.

Par couvercle amovible, on comprend que le couvercle peut être séparé de la chambre par l'utilisateur facilement, sans nécessiter la mise en oeuvre d'un outil. Ainsi, le couvercle peut être facilement démonté et nettoyé, par exemple sous un robinet.

De plus, la face inférieure du couvercle comporte les aménagements pour réguler le flux de lait moussé vers les deux conduits de distribution. Ainsi, la chambre est libre de toute aspérité, ce qui permet de faciliter son nettoyage.

De manière avantageuse, le conduit d'entrée du dispositif de distribution coopère avec la buse de sortie de lait moussé de manière étanche et le dispositif de distribution est conçu pour être séparé du système de moussage de lait, sans nécessiter la mise en oeuvre d'un outil pour être nettoyé très facilement.

Avantageusement, les conduits de distribution s'étendent selon une direction verticale et le conduit d'entrée s'étend selon une direction perpendiculaire à la direction verticale.

Cette disposition permet de ralentir le flux de lait moussé issu du conduit d'entrée.

De préférence, la chambre comporte un fond et les au moins deux nervures de répartition du lait moussé s'étendent jusqu'au fond.

Ainsi les nervures s'étendent sur toute la hauteur de la chambre pour former des chicanes qui brisent le flux de lait moussé.

Avantageusement, la chambre comporte une paroi verticale qui s'étend depuis le fond, le fond présentant une forme de trapèze isocèle muni d'une petite base et d'une grande base et le conduit d'entrée est agencé au centre de la paroi issue de la petite base, à proximité du fond, les conduits de distribution étant agencés dans le fond, aux extrémités de la grande base .

De préférence, le couvercle présente également une forme de trapèze isocèle muni d'une petite base et d'une grande base, les nervures étant tangentes à un cercle dont le centre est le milieu de la petite base.

Ainsi, le flux de lait moussé pénètre dans la chambre par le conduit d'entrée agencé dans la paroi, au centre de la petite base et ce flux est redirigé par les nervures vers le milieu de la paroi issue de la grande base. Ensuite le flux peut de manière avantageuse se diviser latéralement en deux parties par des ouvertures agencées entre la paroi issue de la grande base et respectivement un bord libre vertical de chaque nervure.

Avantageusement, les protubérances comportent chacune une face incurvée selon un arc de cercle tangent à la face inférieure.

Ainsi, les bulles d'air entrainées par le flux glissent sur la face incurvée et sont orientées vers le conduit de distribution.

Avantageusement, la chambre présente une hauteur H et les protubérances en forme de pointe incurvée une hauteur h, h étant supérieur à un tiers de H.

Cette disposition permet d'optimiser la hauteur des protubérances par rapport à la hauteur de la chambre pour éviter la stagnation des bulles au-dessus des conduits de distribution et favoriser leur évacuation.

De préférence, le couvercle est réalisé en une matière souple et alimentaire, notamment un silicone.

Ainsi les résidus de lait qui se déposent sur la face intérieure du couvercle adhérent difficilement sur une matière souple, ce qui facilite le nettoyage.

Avantageusement, le couvercle comporte une lèvre souple périphérique d'étanchéité.

Cette disposition permet d'obtenir une chambre étanche. De plus la lèvre souple peut assurer le maintien en position du couvercle sur la chambre

De préférence, le dispositif de distribution comporte un plan de symétrie.

Cette disposition favorise une répartition équitable du lait moussé vers les deux conduits de distribution.

L'invention concerne également une machine à café comportant un système de moussage de lait, caractérisée en ce qu'elle comporte un dispositif de distribution tel que précédemment décrit.

De préférence, la machine à café comporte une buse de sortie café mobile, notamment en translation verticale pour s'adapter à une hauteur d'un ou plusieurs récipients agencés sur un repose-tasse de la machine à café et le dispositif de distribution est agencé à proximité de la buse de sortie café.

Ainsi, l'utilisateur peut ajuster la position de la buse de sortie café munie du dispositif de distribution au-dessus d'un ou plusieurs récipients agencés sur un repose-tasse.

L'invention sera mieux comprise à l'étude des modes de réalisation pris à titre nullement limitatif et illustrés dans les figures annexées dans lesquelles :
- La figure 1 illustre une vue en perspective éclatée d'un dispositif de distribution de boisson à base de lait moussé à double sortie et un système de moussage de lait d'une machine à café selon un mode particulier de réalisation de l'invention.
- La figure 2 illustre une vue en perspective éclatée du dispositif de distribution de boisson illustrée sur la figure 1.
- La figure 3 illustre une vue en perspective du couvercle du dispositif de distribution de boisson illustré sur la figure 1.
- La figure 4 illustre une vue suivant le plan de coupe IV du dispositif de distribution d'une boisson illustré sur la figure 2.
- La figure 5 illustre une vue suivant le plan de coupe V du dispositif de distribution d'une boisson illustré sur la figure 2.

On notera que, dans ce document, les termes «horizontal», «vertical», «inférieur», «supérieur», «longitudinal», «transversal», «haut», «bas», employés pour décrire le dispositif de distribution font référence à ce dispositif de distribution en situation d'usage.

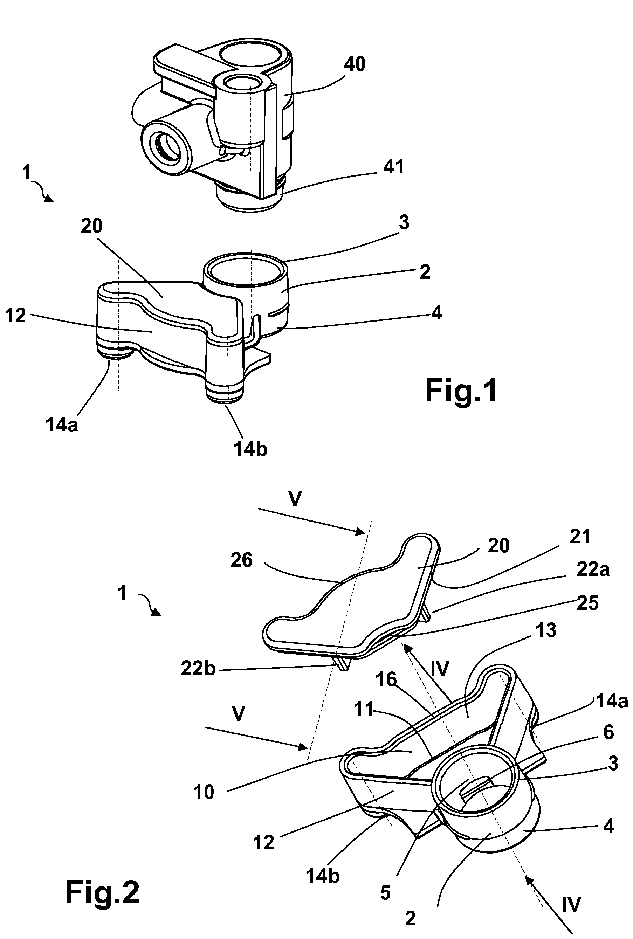

Conformément aux figures 1 à 3, un dispositif de distribution 1 d'une boisson à base de lait moussé comporte une zone d'accouplement 2 cylindrique comprenant une première extrémité 3 fermée et une deuxième extrémité 4 coopérant avec une buse de sortie 41 d'un système 40 de moussage de lait. Un tel dispositif de moussage est, par exemple, décrit dans le document EP2606782. La buse de sortie 41 et la zone d'accouplement 2 s'étendent selon une direction verticale. Le dispositif de distribution 1 comporte une chambre 10 munie d'un fond 11 plat à partir duquel s'étend vers le haut une paroi 12 périphérique. L'extrémité libre supérieure de la paroi 12 défini une ouverture 13 qui est coiffée par un couvercle 20. La zone d'accouplement 2 est adossée à la paroi 12 dans une partie 5 commune et le dispositif de distribution 1 comporte un conduit d'entrée 6 agencé dans cette partie 5 commune, à proximité du fond 11 et de la première extrémité 3 fermée. Le conduit d'entrée 6 présente une section transversale rectangulaire et s'étend selon une direction horizontale, parallèle au fond 11. La chambre de distribution 10 comporte dans le fond 11 deux conduits de distribution 14a, 14b qui s'étendent vers le bas.

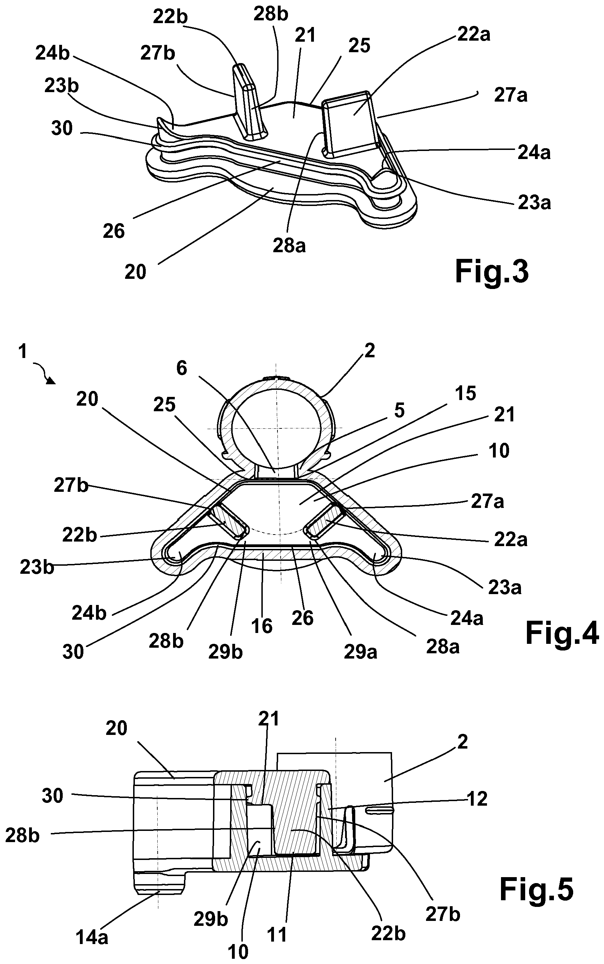

Tel que visible plus particulièrement à la figure 3, le couvercle 20 comporte une face inférieure 21 orientée vers l'intérieur de la chambre 10. La face inférieure 21 comprend deux nervures 22a, 22b verticales qui s'étendent vers le bas, jusqu'au fond 11 de la chambre 10. La face inférieure 21 comprend également deux protubérances 23a, 23b en forme de pointe incurvée qui s'étendent vers le bas et qui sont disposées à l'aplomb des deux conduits de distribution 14a, 14b. Les protubérances 23a, 23b sont issues de l'intersection d'un cylindre vertical avec un plan de coupe en arc de cercle, tangent à la face inférieure 21. Ainsi, les protubérances 23a, 23b comportent, à l'intersection, une face 24a, 24b incurvée, orientée vers les conduits de distribution 14a, 14b.

Tel que visible aux la figures 2 et 4, le fond 11 plat de la chambre 10 présente une forme de trapèze isocèle muni d'une petite base 15 et d'une grande base 16. Le conduit d'entrée 6 débouche dans la chambre 10 au centre de la paroi 12 issue de la petite base 15, à proximité du fond 11. Les conduits de distribution 14a, 14b sont cylindriques et sont agencés dans le fond 11, aux extrémités de la grande base 16.

Le couvercle 20 présente également une forme de trapèze isocèle muni d'une petite base 25 et d'une grande base 26, identique à la petite base 15 et à la grande base 16. Dans un plan de coupe horizontal (Fig. 4), les nervures 22a, 22b sont tangentes à un cercle dont le centre est le milieu de la petite base 25. Les nervures 22a, 22b s'étendent horizontalement à partir d'un premier bord 27a, 27b vertical adjacent à la paroi 12 jusqu'à un deuxième bord 28a, 28b vertical libre. Chaque deuxième bord 28a, 28b vertical libre définit avec la paroi 12 issue de la grande base 16 une ouverture 29a, 29b.

Le couvercle 20 comporte une lèvre 30 souple périphérique qui coopère avec l'extrémité libre supérieure de la paroi 12 pour rendre la chambre 10 étanche. Le couvercle 20 est réalisé en une matière souple et alimentaire, notamment un silicone.

Le dispositif de distribution 1 agencé sur le système 40 de moussage est destiné à coopérer avec une machine à café (non illustrée sur les figures). Une telle machine à café comporte notamment un réservoir à grains de café, un broyeur, une chaudière permettant de produire de l'eau chaude pour alimenter une chambre d'infusion de café et pour alimenter le système 40 de moussage en eau chaude et/ou vapeur. Le dispositif de distribution 1 à double sortie est agencé à proximité d'une buse de sortie café à double sortie. Le dispositif de distribution 1 à double sortie et la buse de sortie café à double sortie sont disposés au-dessus d'un repose-tasse recevant deux récipients.

En fonctionnement, le système 40 de moussage de lait fournit un flux de lait moussé qui entre horizontalement dans la chambre 10 du dispositif de distribution 1 par le conduit d'entrée 6. Le flux de lait moussé est reconcentré par les nervures 22a, 22b sur la paroi 12 issue de la grande base 16, opposée au conduit d'entrée 6. Ainsi, les nervures 22a, 22b forment des chicanes qui permettent de briser le flux de lait moussé à la sortie du conduit d'entrée 6. La zone perturbée du flux est confinée dans une partie centrale de la chambre 10. L'écoulement du lait moussé se partage en deux de manière équilibrée par les ouvertures 29a, 29b pour atteindre les deux conduits de distribution 14a, 14b. Les faces 24a, 24b incurvées des deux protubérances 23a, 23b guident les bulles vers les conduits de distribution 14a, 14b. Ainsi, le lait moussé issu du système 40 de moussage va être divisé en deux par le dispositif de distribution 1 et réparti équitablement dans les deux récipients.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Dans une variante de réalisation non représentée sur les figures, les nervures présentent une section transversale en arc de cercle.

## Revendications

1. Dispositif de distribution (1) d'une boisson à base de lait moussé comportant une chambre (10) munie d'un conduit d'entrée (6) recevant un flux de lait moussé en provenance d'une buse de sortie (41) de lait moussé d'un système (40) de moussage de lait et de deux conduits de distribution (14a, 14b) destinés à déverser la boisson issue de la buse de sortie (41) de lait moussé dans deux récipients, la chambre (10) comportant un couvercle (20) amovible qui comprend une face inférieure (21) orientée vers l'intérieur de la chambre (10), **caractérisé en ce que** la face inférieure (21) comporte au moins deux nervures (22a, 22b) de répartition du lait moussé qui s'étendent vers l'intérieur de la chambre (10) et qui sont agencées dans le flux de lait moussé issu du conduit d'entrée (6) et/ou deux protubérances (23a, 23b) en forme de pointe incurvée agencées au-dessus des deux conduits de distribution (14a, 14b).

2. Dispositif de distribution (1) d'une boisson selon la revendication 1, **caractérisé en ce que** les conduits de distribution (14a, 14b) s'étendent selon une direction verticale et **en ce que** le conduit d'entrée (6) s'étend selon une direction perpendiculaire à la direction verticale.

3. Dispositif de distribution (1) d'une boisson selon l'une quelconque des revendications 1 à 2, **caractérisé en ce que** la chambre (10) comporte un fond (11) et **en ce que** les au moins deux nervures (22a, 22b) de répartition du lait moussé s'étendent jusqu'au fond (11).

4. Dispositif de distribution (1) d'une boisson selon la revendication 3, **caractérisé en ce que** la chambre (10) comporte une paroi (12) verticale qui s'étend depuis le fond (11), le fond (11) présentant une forme de trapèze isocèle muni d'une petite base (15) et d'une grande base (16) et **en ce que** le conduit d'entrée (6) est agencé au centre de la paroi (12) issue de la petite base (15), à proximité du fond (11), les conduits de distribution (14a, 14b) étant agencés dans le fond (11), aux extrémités de la grande base (16).

5. Dispositif de distribution (1) d'une boisson selon la revendication 4, **caractérisé en ce que** le couvercle (20) présente également une forme de trapèze isocèle muni d'une petite base (25) et d'une grande base (26), les nervures (22a, 22b) étant tangentes à un cercle dont le centre est le milieu de la petite base (25).

6. Dispositif de distribution (1) d'une boisson selon l'une quelconque des revendications précédentes, **caractérisé en ce que** les protubérances (23a, 23b) comportent chacune une face (24a, 24b) incurvée selon un arc de cercle tangent à la face inférieure (21).

7. Dispositif de distribution (1) d'une boisson selon l'une quelconque des revendications précédentes, **caractérisé en ce que** la chambre (10) présente une hauteur H et les protubérances (23a, 23b) en forme de pointe incurvée une hauteur h, h étant supérieur à un tiers de H.

8. Dispositif de distribution (1) d'une boisson selon l'une quelconque des revendications précédentes, **caractérisé en ce que** le couvercle (20) est réalisé en une matière souple et alimentaire, notamment un silicone.

9. Dispositif de distribution (1) d'une boisson selon l'une quelconque des revendications précédentes, **caractérisé en ce que** le couvercle (20) comporte une lèvre (30) souple périphérique d'étanchéité.

10. Dispositif de distribution (1) d'une boisson selon l'une quelconque des revendications précédentes, **caractérisé en ce qu'**il comporte un plan de symétrie.

11. Machine à café comportant un système (40) de moussage de lait, **caractérisée en ce qu'**elle comporte un dispositif de distribution (1) conforme à l'une des revendications 1 à 10.

## Patentansprüche

1. Vorrichtung zum Ausgeben (1) eines Getränks auf Basis von aufgeschäumter Milch, umfassend eine Kammer (10), die mit einem Einlasskanal (6) versehen ist, der einen Fluss aufgeschäumter Milch von einer Düse zum Auslassen (41) von aufgeschäumter Milch eines Systems (40) zum Aufschäumen von Milch aufnimmt, und zwei Ausgabekanäle (14a, 14b), die dazu bestimmt sind, das Getränk, das aus der Düse zum Auslassen (41) von aufgeschäumter Milch ausgeht, in zwei Behälter auszugießen, wobei die Kammer (10) eine abnehmbare Abdeckung (20) aufweist, die eine untere Fläche (21) umfasst, die zum Inneren der Kammer (10) hin orientiert ist, **dadurch gekennzeichnet, dass** die untere Fläche (21) mindestens zwei Rippen (22a, 22b) zur Verteilung der aufgeschäumten Milch, die sich in das Innere der Kammer (10) erstrecken und die in dem Fluss der aufgeschäumten Milch angeordnet sind, der von dem Einlasskanal (6) ausgeht, und / oder zwei Ausstülpungen (23a, 23b) in Form von gekrümmten Spitzen aufweist, die über den zwei Ausgabekanälen (14a, 14b) angeordnet sind.

2. Vorrichtung zum Ausgeben (1) eines Getränks nach Anspruch 1, **dadurch gekennzeichnet, dass** sich die Ausgabekanäle (14a, 14b) in einer vertikalen Richtung erstrecken, und dass sich der Einlasskanal (6) entlang einer Richtung senkrecht zu der vertikalen Richtung erstreckt.

3. Vorrichtung zum Ausgeben (1) eines Getränks nach einem der Ansprüche 1 bis 2, **dadurch gekennzeichnet, dass** die Kammer (10) einen Boden (11) aufweist, und dass die mindestens zwei Rippen (22a, 22b) zur Verteilung der aufgeschäumten Milch sich bis zu dem Boden (11) erstrecken.

4. Vorrichtung zum Ausgeben (1) eines Getränks nach Anspruch 3, **dadurch gekennzeichnet, dass** die Kammer (10) eine vertikale Wand (12) aufweist, die sich von dem Boden (11) aus erstreckt, wobei der Boden (11) eine Form aus einem gleichschenkligen Trapez aufweist, das mit einer kleinen Basis (15) und einer großen Basis (16) versehen ist, und dass der Einlasskanal (6) in der Mitte der Wand (12), die von der kleinen Basis (15) ausgeht, nahe dem Boden (11) angeordnet ist, wobei die Ausgabekanäle (14a, 14b) in dem Boden (11) an den Enden der großen Basis (16) angeordnet sind.

5. Vorrichtung zum Ausgeben (1) eines Getränks nach Anspruch 4, **dadurch gekennzeichnet, dass** die Abdeckung (20) ebenfalls eine gleichschenklige Trapezform aufweist, die mit einer kleinen Basis (25) und einer großen Basis (26) versehen ist, wobei die Rippen (22a, 22b) tangential zu einem Kreis sind, dessen Mitte die Mitte der kleinen Basis (25) ist.

6. Vorrichtung zum Ausgeben (1) eines Getränks nach einem der vorhergehenden Ansprüche, **dadurch gekennzeichnet, dass** die Ausstülpungen (23a, 23b) jeweils eine Fläche (24a, 24b) aufweisen, die entlang eines tangential zu der Unterseite (21) verlaufenden Kreisbogens gekrümmt ist.

7. Vorrichtung zum Ausgeben (1) eines Getränks nach einem der vorhergehenden Ansprüche, **dadurch gekennzeichnet, dass** die Kammer (10) eine Höhe H aufweist, und dass die Ausstülpungen (23a, 23b) in Form einer gebogenen Spitze eine Höhe h aufweisen, wobei h mehr als ein Drittel von H ist.

8. Vorrichtung zum Ausgeben (1) eines Getränks nach einem der vorhergehenden Ansprüche, **dadurch gekennzeichnet, dass** die Abdeckung (20) aus einem flexiblen und lebensmittelgerechten Material, insbesondere einem Silikon, besteht.

9. Vorrichtung zum Ausgeben (1) eines Getränks nach einem der vorhergehenden Ansprüche, **dadurch gekennzeichnet, dass** die Abdeckung (20) eine flexible, umlaufende Dichtungslippe (30) aufweist.

10. Vorrichtung zum Ausgeben (1) eines Getränks nach einem der vorhergehenden Ansprüche, **dadurch gekennzeichnet, dass** sie eine Symmetrieebene umfasst.

11. Kaffeemaschine, aufweisend ein System (40) zum Aufschäumen von Milch, **dadurch gekennzeichnet, dass** sie eine Ausgabevorrichtung (1) nach einem der Ansprüche 1 bis 10 aufweist.

## Claims

1. Device for dispensing (1) a frothed milk beverage comprising a chamber (10) provided with an inlet duct (6) receiving a flow of frothed milk coming from an outlet nozzle (41) of frothed milk from a milk frothing system (40) and two dispensing ducts (14a, 14b) intended to pour the beverage coming from the outlet nozzle (41) of frothed milk into two containers, with the chamber (10) comprising a removable cover (20) which comprises a lower face (21) oriented towards the inside of the chamber (10), **characterised in that** the lower face (21) comprises at least two ribs (22a, 22b) for separating frothed milk which extend to the inside of the chamber (10) and which are arranged in the flow of frothed milk coming from the inlet duct (6) and/or two protuberances (23a, 23b) in the form of a curved tip arranged above the two dispensing ducts (14a, 14b).

2. Device for dispensing (1) a beverage according to claim 1, **characterised in that** the dispensing ducts (14a, 14b) extend in a vertical direction and **in that** the inlet duct (6) extends in a direction perpendicular to the vertical direction.

3. Device for dispensing (1) a beverage according to any of claims 1 to 2, **characterised in that** the chamber (10) comprises a bottom (11) and **in that** the at least two ribs (22a, 22b) for separating frothed milk extend to the bottom (11).

4. Device for dispensing (1) a beverage according to claim 3, **characterised in that** the chamber (10) comprises a vertical wall (12) which extends from the bottom (11), with the bottom (11) having an isosceles trapezoid shape provided with a small base (15) and with a large base (16) and **in that** the inlet duct (6) is arranged at the centre of the wall (12) coming from the small base (15), in the vicinity of the bottom (11), with the dispensing ducts (14a, 14b) being arranged in the bottom (11), at the ends of the large base (16).

5. Device for dispensing (1) a beverage according to claim 4, **characterised in that** the cover (20) also has an isosceles trapezoid shape provided with a small base (25) and with a large base (26), with the ribs (22a, 22b) being tangent to a circle of which the centre is the middle of the small base (25).

6. Device for dispensing (1) a beverage as claimed in any preceding claim, **characterised in that** the protuberances (23a, 23b) each comprise a curved face (24a, 24b) according to an arc of a circle tangent to the lower face (21).

7. Device for dispensing (1) a beverage as claimed in any preceding claim, **characterised in that** the chamber (10) has a height H and the protuberances (23a, 23b) in the form of a curved tip a height h, with h being greater than a third of H.

8. Device for dispensing (1) a beverage as claimed in any preceding claim, **characterised in that** the cover (20) is made of a flexible and food-safe material, in particular a silicone.

9. Device for dispensing (1) a beverage as claimed in any preceding claim, **characterised in that** the cover (20) comprises a peripheral flexible sealing lip (30).

10. Device for dispensing (1) a beverage as claimed in any preceding claim, **characterised in that** it comprises a plane of symmetry.

11. Coffee machine comprising a milk frothing system (40), **characterised in that** it comprises a dispensing device (1) in accordance with one of claims 1 to 10.
